# EUROPEAN PATENT APPLICATION

(11) **EP 3 910 123 A1**
(43) Date of publication of application: **17.11.2021**
(21) Application number: 19908971.5
(22) Date of filing: 27.12.2019
(51) Int. Cl.: E04B 1/343, B60P 3/34

(54) **MOBILE MODULAR HOUSE**

(30) Priority: 13.01.2019 RU 2019100515
(71) Applicant: Kasiev, Dmitry Gennadievich, Moscow, 117342 (RU)
(72) Inventor: Kasiev, Dmitry Gennadievich, Moscow, 117342 (RU)
(74) Representative: Osmans, Voldemars
(86) International application number: PCT/RU2019/001037
(87) International publication number: WO 2020/145846

(57) **Abstract**

The invention refers to the area of construction of structures for personal public purposes, namely, to prefabricated transported structures for installation in limited spaces and can be used in the construction of rapidly erected mobile spatial structures of various functional purposes, as well as in places where capital construction is prohibited. The invention consists in the mobile modular house containing folding blocks that are house components connected between each other, with all components of the house placed on a wheeled platform, and its walls and windows formed from separate modules of a triangular shape, made of solid material, with the edges around the perimeter of each module equipped with magnetic tapes. The technical result to be attained using the invention claimed is decreased assembly time, decreased labor intensity of the assembly, and increased variability of the finished product.

## Description

### Technical field

The invention refers to the area of construction of structures for public purposes, namely, to prefabricated transported structures for installation in limited spaces and can be used in the construction of rapidly erected mobile spatial structures of various functional purposes, as well as in places where capital construction is prohibited.

The structure can be used for the construction of residential premises and other real estate items for accommodation: shopping malls; health facilities; educational and cultural institutions; offices; information processing and mail terminals (hubs), as well as industrial enterprises.

### State of the art

From patent of the Russian Federation No. 2105850, class E04N, published on 03.03.1998, a modular mobile building is known in the art, containing two modular blocks under a common roof in parallel rows of industrially manufactured containers located through a span opposite each other in two floors and divided into compartments, equipped with end doors and, at least, one staircase and roof.

The disadvantages of the known technical device include poor performance due to inconvenient use, a limited number of premises, segregation of premises and lack of uniform critical services support for the institutions located in the building.

From patent of the Russian Federation No. 117482, class E04N 3/00, published on 27.06.2012, a modular mobile building is known, containing two modular blocks under a common roof of parallel rows of industrially manufactured containers, located across the span opposite each other in two floors, divided into compartments, equipped with end doors and, at least, at least one staircase, with containers in these rows adjoined to each other's long sides, with one of the modular blocks assembled from 40-foot containers and the opposite modular block assembled from 20-foot containers, at least one row of which on one or two floors of the module is used for administration and technical services, and at least one of the 20-foot containers on each floor is used for administration and technical services.

This device known in the art essentially has the same structure as the above-mentioned known device of the mobile modular building, with the increased number of premises and, to a certain extent, with improved critical services support of these premises.

From patent of the Russian Federation No. 142620, class E04B 1/343, published on 27.06.2012, a prefabricated structure is known in the art referred to the area of construction that can be used in the construction of rapidly erected mobile spatial structures of various functional purposes. This structure known in the art contains a folding module consisting of blocks that are pivotally connected with each other enabling mutual rotation and folding, with the specified module formed from square and/or rectangular blocks, or a combination of specified blocks with triangular blocks, with each block connected to neighboring blocks in the direction of folding with no more than by two adjacent edges.

The disadvantage of this solution is limited functionality and labor intensity of assembly-disassembly, the difference in the structure of the blocks the modules are assembled from.

From patent of the Russian Federation No. 2583384, class E04B 1/343, published on 10.05.2016, a modular housing block structure is known in the art, which is unfoldable and contains one or more folding modules, having a lower element, forming the floor, sloping elements forming the roof and side walls, and two opposite facades - front and rear. Each of the folding modules referred to contains a folding and modular structure containing two adjacent rigid sides or walls fastened with each other by hinges or a fixed node, and a third side or wall attached on hinges to the first two rigid sides or walls mentioned, and at least one intermediate plane attached on hinges to one of the aforementioned roof elements adapted to be attached to another sloping element of the roof. All the elements connected to each other when a house is assembled are rectangular in shape and are connected to each other by hinges.

The disadvantages of this engineering solution adopted as the closest analogue (prototype) includes the use of hinges for connecting the elements of the folding block between each other, which significantly delays and complicates the assembly, resulting in increased labor-intensity. In addition, in the assembled form, the folding block (module) has only one shape, that does not change, which significantly limits the performance of the device, as the finished product is formed only from assembled blocks of the same shape and type, thus limiting the variability of the finished product as assembled.

### Summary of the invention

The technical task to be solved by the invention claimed is to create a mobile prefabricated house with high functionality and performance.

The technical result to be attained using the invention claimed is decreased assembly time, decreased labor intensity of the assembly, and increased variability of the finished product.

This technical result can be attained by the fact that the device claimed contains folding blocks that are house components connected between each other, with all components of the house placed on a wheeled platform, and its walls and windows are formed from separate modules of a triangular shape, made of solid sandwich-type material (see the description below), with the edges around the perimeter of each module equipped with magnetic tapes designed to fasten modules to each other.

### Preferred embodiments of the invention, description of drawings

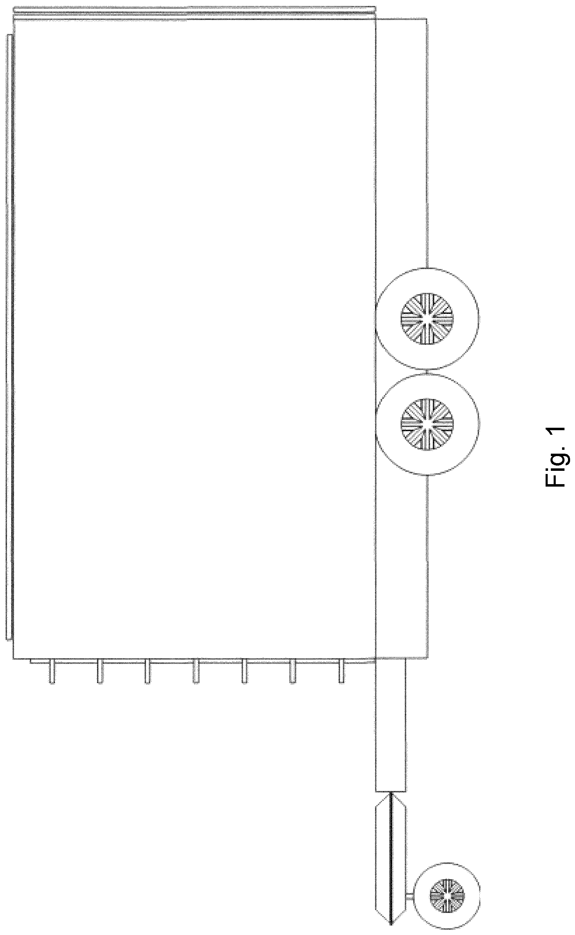

The house, as assembled, is a common van (container) on wheels (Figure 1, side view).

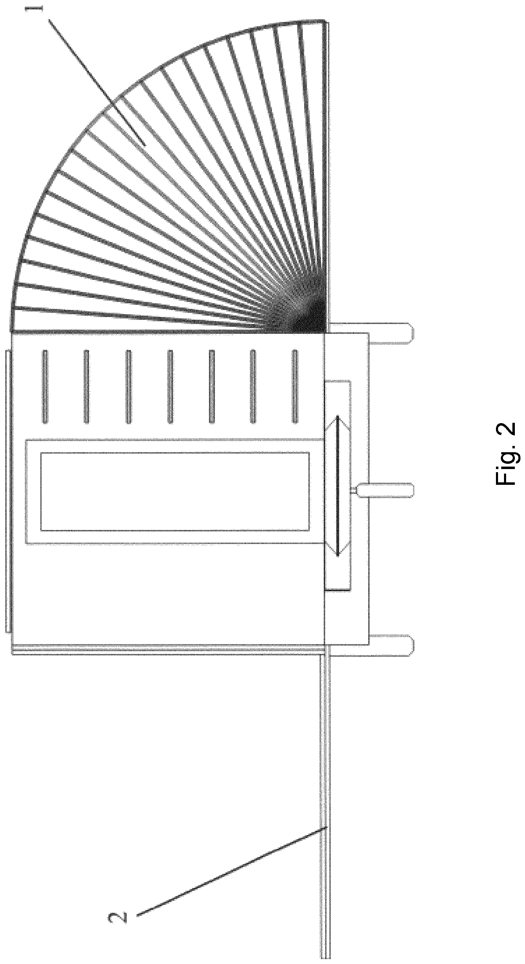

The house is shaped by first unfolding the side walls of the container, one of which has pre-fabricated bathroom 1 as assembled, and the other - additional floor 2 (Figure 2).

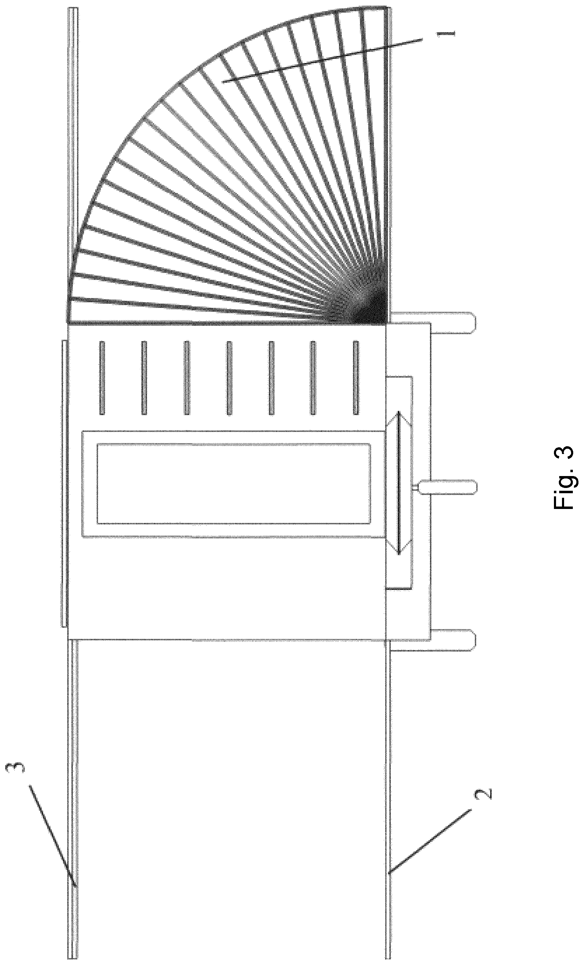

At the next stage, above floor 2, ceiling 3 is raised, that is shaped above bathroom 1 (Figure 3) as well, after which supports are placed between the floor and the ceiling. Additional support is ensured by the ready-built kitchen that is fastened both to the floor and the original ceiling of the container that remains in place. In addition, stairs to climb to the roof perform a supporting function. The house floor is double (see the description below).

A sandwich-type material made of foam polystyrene placed between layers of aluminum alloy is used for the floor and the ceiling. This combination of materials with certain solid, noise-protective and thermal protection properties is the most common for the manufacture of walls of present day mobile houses.

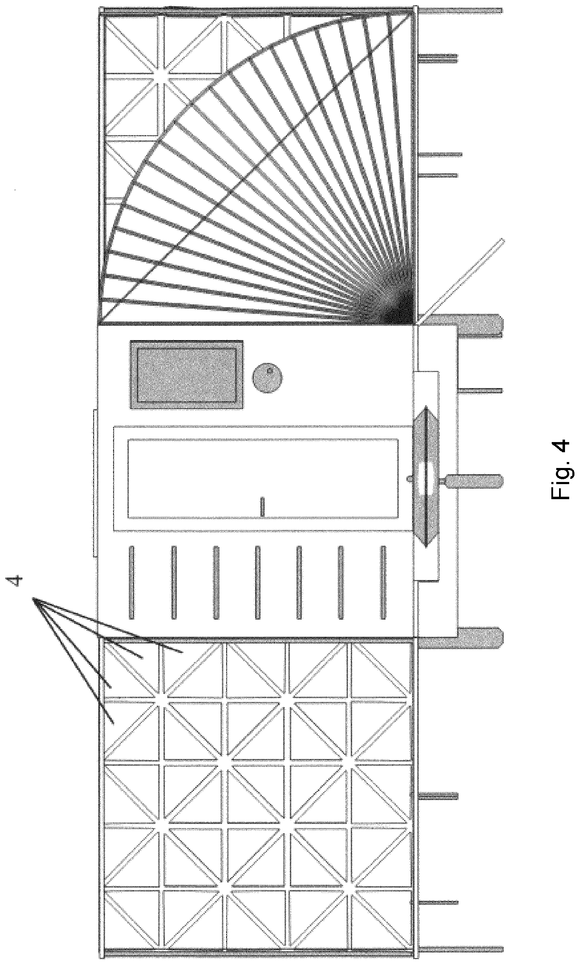

Individual similar modules 4 (Figure 4) of a triangular shape are used to make both external and internal walls, and the sandwich-type material mentioned above is used for them.

The seams between the modules are soft and are made as a PVC canvass between modules.

Some of the modules from which windows are formed are transparent.

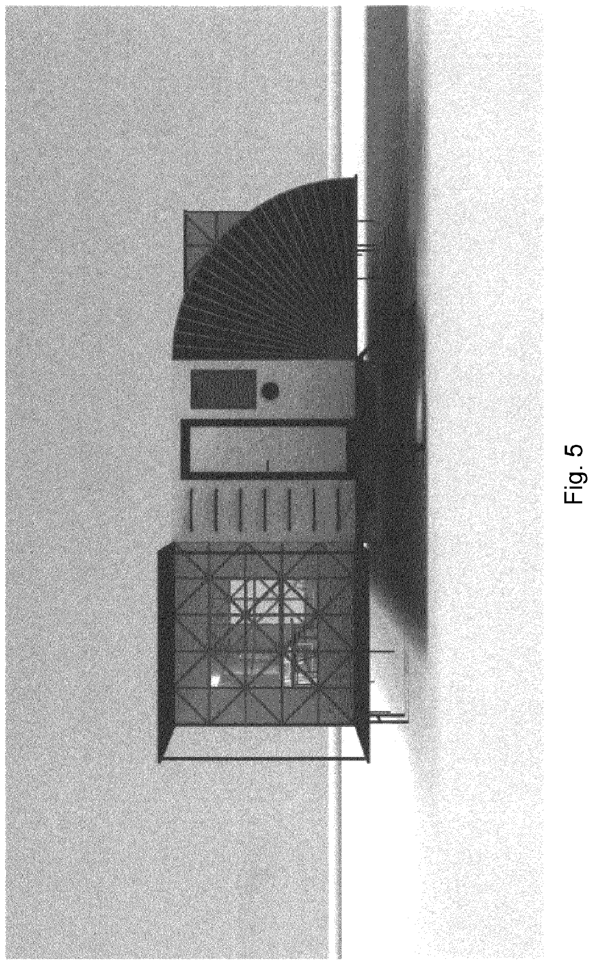

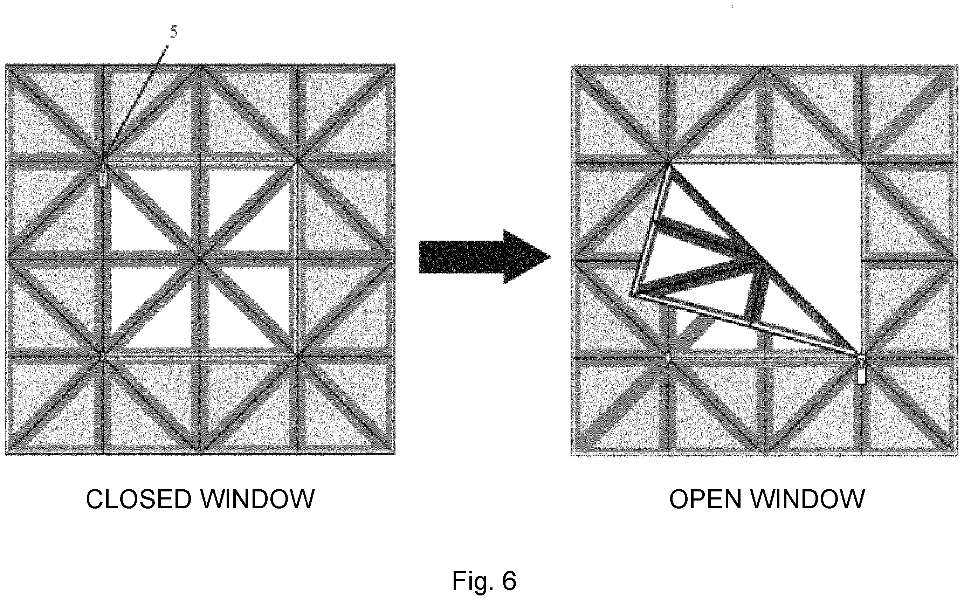

Figure 5 shows a house with fully unfolded internal modular walls (front view), including the structure of a modular wall with a window. The side of the module that is an equilateral rectangular triangle is 42 cm long, which is the most comfortable seat height. It enables assembly of seats from modules. Magnetic tapes enable fastening of structures folded at soft seams, and airtight zippers 5 (Figure 6) are used to open and close the windows and to make openings in the walls.

The formed wall with an open window is shown in Figure 6.

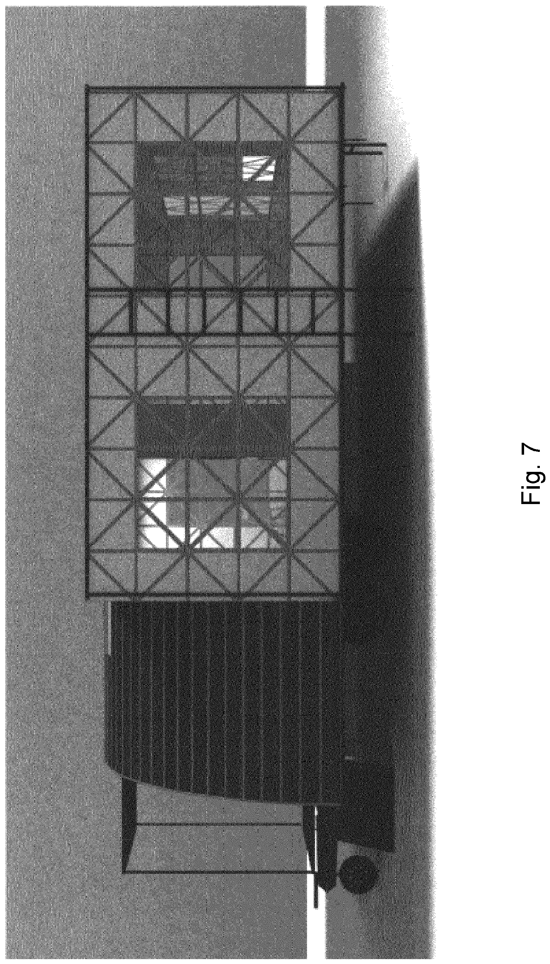

The general view (axonometry) of the modular house after the final assembly is given in Figure 5 and Figure 7.

As for the technical infrastructure of the house, it is located in the double-floor system, where, in particular, a generator, containers for clean, technical and used water, gas cylinders and free space for luggage are placed. The technical infrastructure and luggage placed in the floor make the structure more stable and make the floor warmer.

There is a solar panel on the roof. Thanks to this, the house can be provided with electricity not only by the generator, but also autonomously with solar energy.

The above-mentioned structure of the modules used for the assembly of the house allows, without unnecessary time and labor costs, to create a variety of structures ensuring a wide variability of the finished product, and placing all the components of the house on a wheeled platform only increases its mobility.

## Claims

1. A mobile modular house containing folding blocks that are house components connected between each other, with all components of the house placed on a wheeled platform, and its walls and windows are formed from separate modules of a triangular shape, made of solid material, with the edges around the perimeter of each module equipped with magnetic tapes.

2. The mobile modular house of claim 1 **characterized by** that a sandwich-type material made of foam polystyrene placed between layers of aluminum alloy is used as a material for the modules used for forming walls.

3. The mobile modular house of claim 1 **characterized by** that the modules used for forming windows are transparent.

4. The mobile modular house of claim 1 **characterized by** that an airtight zipper is used to close and open the windows.
